# EUROPEAN PATENT APPLICATION

(11) **EP 2 108 823 A2**
(43) Date of publication of application: **14.10.2009**
(21) Application number: 09154477.5
(22) Date of filing: 06.03.2009
(51) Int. Cl.: F03D 7/00, F03D 11/00

(54) **Independent sensing system for wind turbines**

(30) Priority: 10.03.2008 US 46762
(71) Applicant: General Electric Company, Schenectady, NY 12345 (US)
(72) Inventor: Menke, Detlef, 49504 Lotte (DE)
(74) Representative: Bedford, Grant Richard

(57) **Abstract**

A wireless sensing device (300) for use in a wind turbine (100) having a sensor (407) capable of measuring one or more parameters for wind turbine operation. The sensing device (407) also includes a transmission device (405) capable of wirelessly transmitting one or more signals (305) corresponding to the one or more measured parameters to a controller (303). An independent power source (403) is included to power the transmission device (405) and the sensor (407). A method and system for operating and monitoring wind turbine operation are also disclosed.

## Description

The disclosure is directed generally to rotating device operations such as a wind turbine operation. In particular, the disclosure is directed to rotating device operations requiring the measurement of various parameters.

Recently, wind turbines have received increased attention as environmentally safe and relatively inexpensive alternative energy sources. With this growing interest, considerable efforts have been made to develop wind turbines that are reliable and efficient.

Generally, a wind turbine includes a rotor having multiple blades. The rotor is mounted to a housing or nacelle, which is positioned on top of a truss or tubular tower. Utility grade wind turbines (i.e., wind turbines designed to provide electrical power to a utility grid) can have large rotors (e.g., 30 or more meters in length). In addition, the wind turbines are typically mounted on towers that are at least 60 meters in height. Access and/or monitoring to these large wind turbines can be difficult and/or expensive, particularly at wind turbine installations offshore. When the length of the blades on wind turbines is increased, additional parameters are monitored to adjust the blade for maximum efficiency and to reduce blade component costs / weight. Information about particular operational parameters may improve operation and/or maintenance of wind turbines. For example, acceleration of the blades may be measured in a number of directions. The acceleration information may provide information regarding operation, such as noise produced by the blades. In addition, other operational parameters that may be measured include aerodynamic stall, temperatures, forces, and/or mechanical deflection. The parameters can be used to monitor the blade, to increase the energy production, to extend the lifetime of a blade.

In the past, measurements of particular operational parameters, including blade conditions and properties have been difficult. As the wind turbines increase in size, longer blades are needed. To efficiently monitor and adjust the blades, measurement must be taken from on and/or within the blades.

In addition, wired sensor systems suffer from the drawback that lightning strikes may be conveyed along wires to more sensitive systems causing damage to the wind turbine and wind turbine systems. Fiber optic systems for use in communication to sensors are not easily handled and are expensive. In addition, optical or electrical wires must extend from the rotor to the blade. Inclusion of these wires requires slip rings and increases part costs and maintenance costs.

What is needed is a device, method, and system for measuring wind turbine blade parameters and communicating the data so that efficient control and monitoring can be performed that is capable of withstanding the conditions associated with wind turbine operation and includes reduced or eliminated risk in damaging important equipment within the wind turbine during lightning strikes and to increase productivity of the wind turbine.

An aspect of the present disclosure includes a wireless sensing device for use in a wind turbine having a sensor capable of measuring one or more parameters for wind turbine operation. The sensing device also includes a transmission device capable of wirelessly transmitting one or more signals corresponding to the one or more measured parameters to a controller. An independent power source is included to power the transmission device and the sensor.

Another aspect of the present disclosure includes a wind turbine monitoring system. The system includes a controller configured to operate a wind turbine, a wind turbine component, and a wireless sensing device arranged and disposed with respect to the wind turbine component to sense one or more parameters for wind turbine operation. The wireless sensing device includes a sensor capable of measuring the one or more parameters and a transmission device capable of wirelessly transmitting one or more signals corresponding to the one or more measured parameters to the controller. An independent power source is included to power the transmission device and the sensor.

Still another aspect of the present disclosure includes a method for operating a wind turbine. The method includes providing a controller configured to operate a wind turbine, a wind turbine component; and a wireless sensing device arranged and disposed with respect to the wind turbine component to sense one or more parameters for wind turbine operation. The wireless sensing device includes a sensor capable of measuring the one or more parameters for wind turbine operation, a transmission device, and an independent power source for powering the transmission device and sensor. The one or more parameters are measured with the sensor and are transmitted to the controller. The wind turbine is operated with the controller in response to the one or more parameters.

Embodiments of the disclosure include a device, system, and method based upon radio frequency, having an independent power supply, allowing for the wireless transmission of measurements taken by a sensor in or on a wind turbine component. The use of an independent power source and wireless transmission of information permits the wireless sensing device to provide information about operational parameters, while preventing or eliminating propagation of lightning strikes, particularly to the blades, to important wind turbine controls or components.

One advantage includes a system for monitoring that requires little or no maintenance.

In addition, the system is inexpensive and may utilize wireless communication that permits flexibility in the monitoring and operation of the wind turbine.

Further, the system provides a method that is capable of taking into account blade parameters in the operation of the wind turbine to provide efficient operation.

Various features and advantages of the present invention will be apparent from the following more detailed description of the preferred embodiment, taken in conjunction with the accompanying drawings which illustrate, by way of example, the principles of the invention, and in which:
FIG. 1 is a side view of a wind turbine according to an embodiment of the present disclosure.
FIG. 2 shows a cutaway view of a nacelle according to an embodiment of the present disclosure.
FIG. 3 is a front view of a wind turbine according to an embodiment of the present disclosure.
FIG. 4 is a schematic view of a wireless sensing device according to an embodiment of the present disclosure.
FIG. 5 shows a cutaway view of a nacelle having a wireless device mounted on the low speed shaft according to an embodiment of the present disclosure.

Wherever possible, the same reference numbers will be used throughout the drawings to refer to the same or like parts.

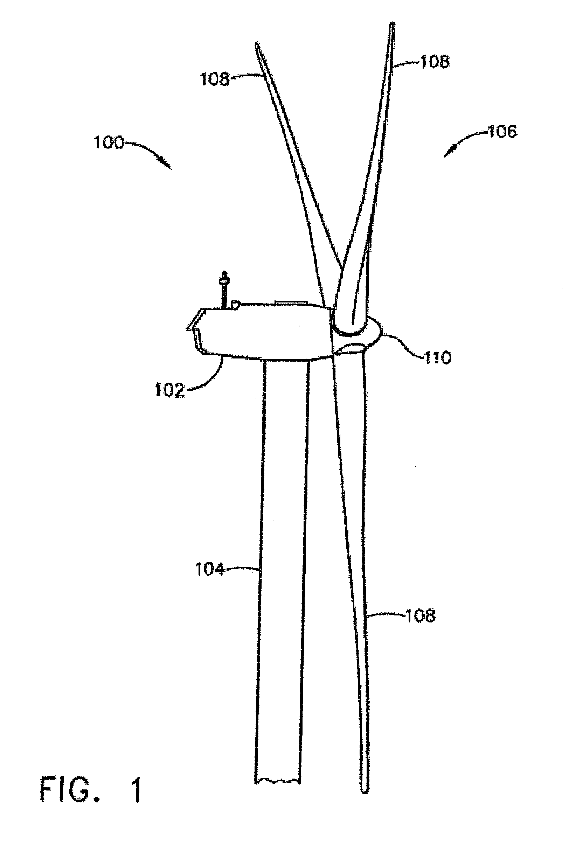

As shown in FIG. 1, a wind turbine 100 generally comprises a nacelle 102 housing a generator (not shown in FIG. 1). Nacelle 102 is a housing mounted atop a tower 104, only a portion of which is shown in FIG. 1. The height of tower 104 is selected based upon factors and conditions known in the art, and may extend to heights up to 100 meters or more. The wind turbine 100 may be installed on any terrain providing access to areas having desirable wind conditions. The terrain may vary greatly and may include, but is not limited to, mountainous terrain or offshore locations. Wind turbine 100 also comprises a rotor 106 that includes one or more rotor blades 108 attached to a rotating hub 110. Although wind turbine 100 illustrated in FIG. 1 includes three rotor blades 108, there are no specific limits on the number of rotor blades 108 required by the present disclosure.

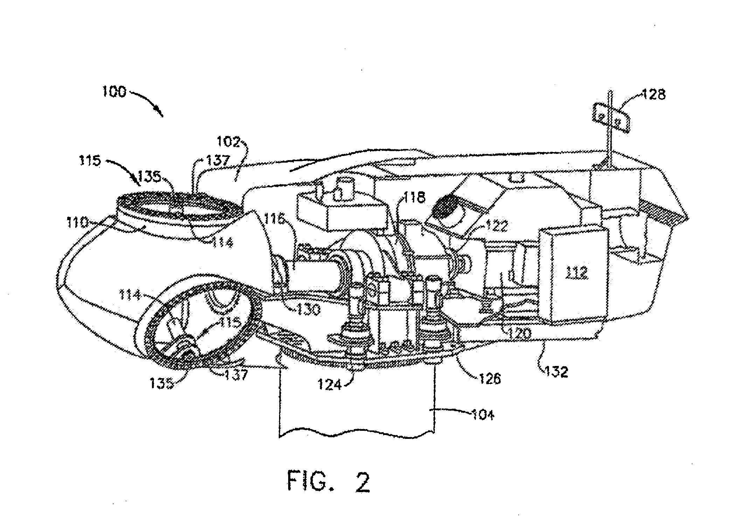

As shown in FIG. 2, various components are housed in nacelle 102 atop tower 104 of wind turbine 100. For example, a variable blade pitch drive 114 may control the pitch of blades 108 (not shown in FIG. 2) that drive hub 110 as a result of wind. Hub 110 may be configured to receive three blades 108, but other configurations may utilize any number of blades. In some configurations, the pitches of blades 108 are individually controlled by blade pitch drive 114. Hub 110 and blades 108 together comprise wind turbine rotor 106. The pitch gear assembly 115 is a ring and pinion gear arrangement driven by blade pitch drive 114, having a circular pinion assembly 135 engaging a ring assembly 137. The ring assembly 137 is a single gear with multiple gear teeth arranged in a substantially arcuate arrangement and connected to the blade 108 in a manner that permits adjustment of the pitch of blades 108. The teeth of the pinion assembly 135 mesh with the teeth of the ring assembly 137 and translate the rotational motion provided by the pitch drive 114 through the pinion assembly 135 into the rotational motion of the ring portion 137 that corresponds to pitch angles for the blade 108. The pitch angle adjusts the transmission of force from the wind to the blade 108 and rotor 106, allowing control of rotational speed and torque.

The drive train of the wind turbine 100 includes a main rotor shaft 116 (also referred to as a "low speed shaft") connected to hub 110 via main bearing 130 and (in some configurations), at an opposite end of shaft 116 to a gear box 118. Gear box 118, in some configurations, utilizes a dual path geometry to drive an enclosed high speed shaft. In other configurations, main rotor shaft 116 is coupled directly to generator 120. The high speed shaft (not shown in FIG. 2) is used to drive generator 120, which is mounted on main frame 132. In some configurations, rotor torque is transmitted via coupling 122. Generator 120 may be of any suitable type, for example and without limitation, a wound rotor induction generator or a direct drive permanent magnet generator. In one embodiment, the variable speed system comprises a wind turbine generator with power/torque capability, which is coupled to and supplies generated power to a grid.

Yaw drive 124 and yaw deck 126 provide a yaw orientation system for wind turbine 100 to rotate the wind turbine to a position that faces the wind. Meterological boom 128 provides information for a turbine control system, including wind direction and/or wind speed. In some configurations, the yaw system is mounted on a flange provided atop tower 104. The configuration shown in FIG. 2 is merely exemplary. The present disclosure is not limited to the particular configuration shown in FIG. 2. For example, the wind turbine 100 of the present disclosure may include alternate configurations of generators 120 and gear box 118, including direct drive systems and systems that eliminate the use of gear box 118.

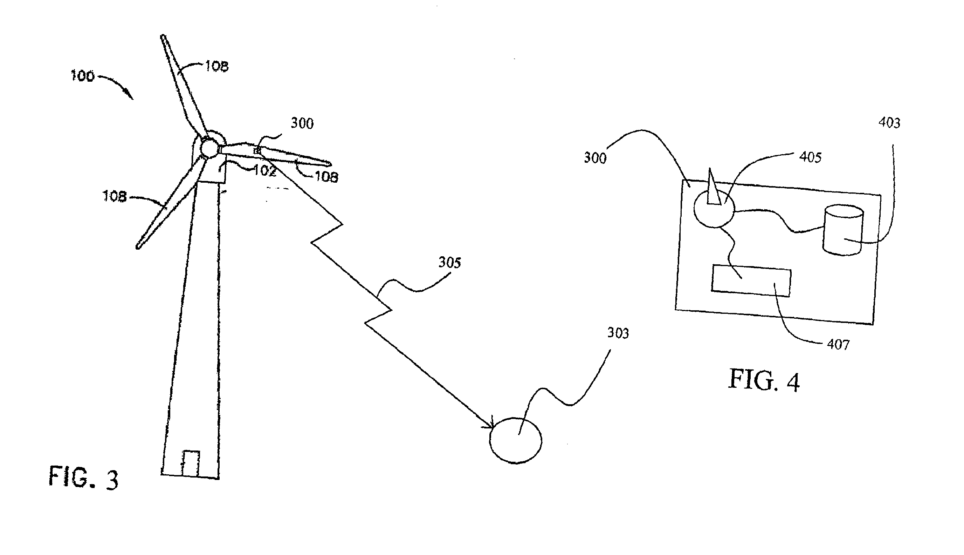

As shown in FIGs. 1 and 2, the wind turbine 100 includes a number of rotating devices and components. As the size and accessibility of the individual components is limited, the monitoring and/or measuring of operational parameters may be accomplished wirelessly with wireless sensing devices 300 (see e.g., FIG. 3) according to embodiments of the present disclosure.

FIG. 3 shows a front view of wind turbine system according to an embodiment of the disclosure. The wind turbine 100 includes a plurality of blades 108 that rotate about hub 104. A wireless sensing device 300 is mounted onto a blade 108 and measures an operational parameter. "Operational parameters", "parameters" and grammatical variations thereof, as used herein, include parameters usable for operation of the wind turbine and wind farm/wind plant management systems. Suitable operational parameters include, but are not limited to, acceleration, vibration, noise, temperature, pressure, stress, deflection and combinations thereof. The components onto into or into which the wireless sensing device 300 may be mounted is not limited to wind turbine blades 108, but may include any rotating device including the low speed shaft 116, the hub 104, the components of gear box 118, the generator 120 or any other rotating components. The wireless sensing device 300 transmits wireless signals 305 to a controller 303. The controller 303 is a device capable of receiving wireless signals 305 and providing operational instructions to the wind turbine 100 in response to the wireless signals 305. The controller 303 may be any conventional controlling device known for use with wind turbine devices and may include wired or wireless connections to the wind turbine 100 for purposes of operation and control. For example, the controller 303 may receive a wireless signal 305 from the wireless sensing device corresponding to a parameter such as noise, which exceeds a predetermined limit for noise. In response, the controller 303 may send a signal or instructions to the wind turbine local controls to adjust the pitch angle of the blades 108, torque settings at the generator 120 or any other operational parameters suitable for reducing noise.

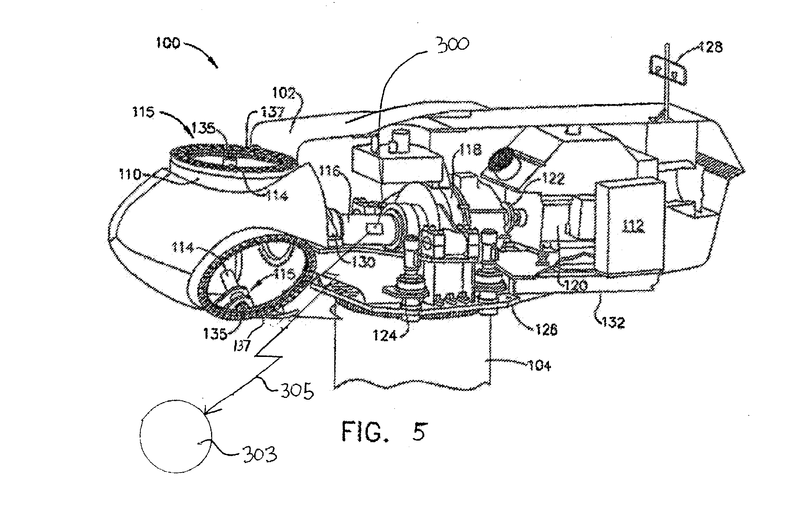

As shown in FIG. 4, the wireless sensing device 300 includes an independent power source 403 that provides electrical power for sensing and/or transmitting parameter information. The independent power source 403 is a power source that is substantially independent of electrical connections to external components. For example, the independent power source 403 may include mechanical to electrical power converter, batteries, photovoltaic cells, other power sources suitable for powering the wireless sensing device 300 or combinations thereof. One embodiment of the present disclosure includes a mechanical to electrical converter having a linear motion energy converter capable of converting linear/vibratory motion to electrical current. In one embodiment, one or more batteries may be present as an accumulator and/or backup power to the mechanical to electrical power converter to supplement and/or collect power produced by the mechanical to electrical power converter. The independent power source 403 is in electrical communication with the transmitting device 405. The transmitting device 405 is a device capable of transmitting or transmitting and receiving wireless signals. While not so limited, the wireless signals 305 may include any electromagnetic energy capable of transmitting information. For example, the wireless signals 305 may include a radio frequency transmitter or transceiver or an infrared transmitter or transceiver. In addition, wireless signals 305 may include radio frequency (RF) wireless area networks (WLAN), including any wireless protocols known for wireless transmission. In addition, a sensor 407 is also in communication with the transmitting device 405, wherein the sensor 407 is a device capable of sensing or measuring one or more operational parameters. For example, the sensor 407 may measure acceleration, vibration, noise, temperature, pressure, stress, deflection and combinations thereof. Example of suitable sensors 407 include, but are not limited to piezoelectric sensors, accelerometers, thermometers, thermocouples, thermistors, optical sensors, microphones, potentiometer/resistors, strain gauges, pressure sensors or any other sensors suitable for measuring parameters such as acceleration, vibration, noise, temperature, deflection and stress. For example, the wireless sensing device 300 may be a unitary component, such as individual subcomponents mounted on a printed circuit board, or may be individual components wired or soldered together. FIG. 5 includes an arrangement within nacelle 102 substantially identical to the arrangement shown and described in FIG. 2. However, as shown in FIG. 5, a wireless sensing device 300 is disposed on low speed shaft 116. The wireless sensing device 300 may be configured to measure the forces and/or deflection on the shaft 116. The mounting of the wireless sensing device 300 on the rotating shaft 116 permits monitoring of the conditions of the low speed shaft 116 without the need of wired communication connections or wired power connection. In addition, the rotation of shaft 116 permits the power source 403, which may be a mechanical to electrical power converter, to generate electricity and power the sensor 407 and the transmitting device 405.

While the above has been described with respect to wireless sensing device installations on blades 108 and low speed shaft 116, the wireless sensing device 300 may be mounted on any other component within the wind turbine 100 that experiences motion and has a need for component monitoring or monitoring of the conditions surrounding the component. In particular components that are difficult to service, such as large components, components having limited access or components that have motion that makes wiring difficult or impossible are particularly suitable for use with the wireless sensing device 300.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the preferred mode contemplated for carrying out this invention, but that the invention will include all embodiments falling within the scope of the appended claims.

Various aspects and embodiments of the present invention are now defined by the following numbered clauses:
1. A wireless sensing device for use in a wind turbine comprising:
   a sensor capable of measuring one or more parameters for wind turbine operation;
   a transmission device capable of wirelessly transmitting one or more signals corresponding to the one or more parameters to a controller; and
   an independent power source for powering the transmission device and the sensor.
2. The device of clause 1, wherein the wireless sensing device is housed within at least one wind turbine blade.
3. The device of any preceding clause, wherein the sensor is selected from the group consisting of a piezoelectric sensor, an accelerometer, a thermometer, a thermocouple, a thermistors, an optical sensor, a microphone, potentiometer/resistors, strain gauges, pressure sensors and combinations thereof.
4. The device of any preceding clause, wherein the transmission device is a radio frequency transmitter or transceiver.
5. The device of any preceding clause, wherein the independent power source includes a mechanical to electrical converter.
6. The device of any preceding clause, wherein the independent power source includes a power source selected from the group consisting of a mechanical to electrical converter, a battery, and combinations thereof.
7. The device of any preceding clause, wherein the one or more parameters include a parameter selected from the group consisting of acceleration, vibration, noise, temperature, pressure, stress, deflection, and combinations thereof.
8. A wind turbine monitoring system comprising:
   a controller configured to operate a wind turbine;
   a wind turbine component; and
   a wireless sensing device arranged and disposed with respect to the wind turbine component to sense one or more parameters for wind turbine operation, the wireless sensing device comprising:
   a sensor capable of measuring the one or more parameters;
   a transmission device capable of wirelessly transmitting one or more signals corresponding to the one or more measured parameters to the controller; and
   an independent power source for powering the transmission device and the sensor.
9. The system of clause 8, wherein the wireless sensing device is housed within at least one wind turbine blade.
10. The system of clause 8 or 9, wherein the sensor is selected from the group consisting of a piezoelectric sensor, an accelerometer, a thermometer, a thermocouple, a thermistor, an optical sensor, a microphone, potentiometer/resistors, strain gauges, pressure sensors and combinations thereof.
11. The system of any of clauses 8 to 10, wherein the transmission device is a radio frequency transmitter or transceiver.
12. The system of any of clauses 8 to 11, wherein the independent power source includes a mechanical to electrical converter.
13. The system of any of clauses 8 to 12, wherein the independent power source includes a power source selected from the group consisting of a mechanical to electrical converter, a battery, and combinations thereof.
14. The system of any of clauses 8 to 13, wherein the one or more parameters include a parameter selected from the group consisting of acceleration, vibration, noise, temperature, pressure, stress, deflection, and combinations thereof.
15. A method for operating a wind turbine comprising:
   providing a controller configured to operate a wind turbine;
   providing a wind turbine component; and
   providing a wireless sensing device arranged and disposed with respect to the wind turbine component to sense one or more parameters for wind turbine operation, the wireless sensing device comprising:
   a sensor capable of measuring the one or more parameters for wind turbine operation;
   a transmission device; and
   an independent power source for powering the transmission device and the sensor;
   measuring the one or more parameters with the sensor;
   wirelessly transmitting the one or more parameters with the transmission device to the controller; and
   operating the wind turbine with the controller in response to the one or more parameters.
16. The method of clause 15, wherein the wireless sensing device is housed within at least one wind turbine blade.
17. The method of clause 15 or 16, wherein wirelessly transmitting includes transmitting via radio frequency.
18. The method of any of clauses 15 to 17, wherein the independent power source includes a mechanical to electrical converter.
19. The method of any of clauses 15 to 18, wherein the independent power source includes a power source selected from the group consisting of a mechanical to electrical converter, a battery, and combinations thereof.
20. The method of any of clauses 15 to 19, wherein the measuring include measuring a parameter selected from the group consisting of acceleration, vibration, noise, temperature, pressure, stress, deflection, and combinations thereof.

## Claims

1. A wireless sensing device (300) for use in a wind turbine (100) comprising:
a sensor (407) capable of measuring one or more parameters for wind turbine operation;
a transmission device (405) capable of wirelessly transmitting one or more signals (305) corresponding to the one or more parameters to a controller (303); and
an independent power source (403) for powering the transmission device (405) and the sensor (407).

2. The device of claim 1, wherein the wireless sensing device (300) is housed within at least one wind turbine blade (108).

3. The device of any preceding claim, wherein the sensor (407) is selected from the group consisting of a piezoelectric sensor, an accelerometer, a thermometer, a thermocouple, a thermistors, an optical sensor, a microphone, potentiometer/resistors, strain gauges, pressure sensors and combinations thereof.

4. The device of any preceding claim, wherein the transmission device (405) is a radio frequency transmitter or transceiver.

5. The device of any preceding claim, wherein the independent power source (403) includes a mechanical to electrical converter.

6. The device of any preceding claim, wherein the independent power source (403) includes a power source selected from the group consisting of a mechanical to electrical converter, a battery, and combinations thereof.

7. The device of any preceding claim, wherein the one or more parameters include a parameter selected from the group consisting of acceleration, vibration, noise, temperature, pressure, stress, deflection, and combinations thereof.

8. The device of any preceding claim, further comprising a meteorological boom (128) configured to provide information selected from the group consisting of wind direction, wind speed, and combinations thereof.

9. The device of claim 8, further comprising a yaw drive (124) and yaw deck (126) configured to adjust the wind turbine in response to the information provided by the meteorological boom (128).

10. The device of any preceding claim:
wherein the wireless sensing device (300) is housed within at least one wind turbine blade (108),
wherein the sensor (407) is selected from the group consisting of a piezoelectric sensor, an accelerometer, a thermometer, a thermocouple, a thermistors, an optical sensor, a microphone, potentiometer/resistors, strain gauges, pressure sensors and combinations thereof,
wherein the transmission device (405) is a radio frequency transmitter or transceiver,
wherein the independent power source (403) includes a power source selected from the group consisting of a mechanical to electrical converter, a battery, and combinations thereof, and
wherein the one or more parameters include a parameter selected from the group consisting of acceleration, vibration, noise, temperature, pressure, stress, deflection, and combinations thereof.
